Europäisches Patentamt

European Patent Office

Office européen des brevets

(11) Publication number: **0 255 690 B1**

(12) **EUROPEAN PATENT SPECIFICATION**

(45) Date of publication of patent specification: **04.03.92**

(51) Int. Cl.⁵: **D21H 15/02**, D21F 11/00, A01G 9/10

(21) Application number: **87110969.0**

(22) Date of filing: **29.07.87**

(54) **Process for producing an agricultural paper.**

(30) Priority: **29.07.86 JP 176757/86**
**30.07.86 JP 181155/86**

(43) Date of publication of application:
**10.02.88 Bulletin 88/06**

(45) Publication of the grant of the patent:
**04.03.92 Bulletin 92/10**

(84) Designated Contracting States:
**BE DE FR GB IT NL SE**

(56) References cited:
**EP-A- 0 082 653**
**US-A- 4 096 313**
**US-A- 4 231 186**
**US-A- 4 477 516**

**TAPPI INTERNATIONAL SYMPOSIUM ON SYNTHETIC PULPS AND PAPERS, Notes, 1980, pages 27-29, Tappi Press, Atlanta, Georgia, US; H. HOLMES: "The synthetic story at one paper mill"**

(73) Proprietor: **OJI PAPER COMPANY LIMITED**
**7-5 Ginza 4-Chome Chuo-ku**
**Tokyo 104(JP)**

Proprietor: **KURARAY Co. LTD.**
**1621 Sakazu Kurashiki-shi**
**Okayama 710(JP)**

Proprietor: **NIPPON TENSAISEITO KABUSHIKI KAISHA**
**3-13, Kyobashi 2-chome Chuo-ku**
**Tokyo(JP)**

(72) Inventor: **Kawase, Mitsuru**
**12-8, Miyanomori Nijo Chuo-ku**
**Sapporo-shi Hokkaido(JP)**
Inventor: **Tanimura, Masashi**
**16, Minamihassen Nishi Inada-cho**
**Obihiro-shi Hokkaido(JP)**
Inventor: **Terasawa, Hidekazu**
**20, Minamihassen Nishi Inada-cho**
**Obihiro-shi Hokkaido(JP)**
Inventor: **Nakamura, Sohei**
**24-4, Oji**
**Ebetsu-shi Hokkaido(JP)**
Inventor: **Nagano, Takayuki**
**113-6, Toko-cho**
**Ebetsu-shi Hokkaido(JP)**

Inventor: **Higashimori, Shosuke**
**1-12-11, Nanki**
**Okayama-shi Okayama-ken(JP)**
Inventor: **Matsuki, Hiroshi**
**Oji-ichigo Apartment 101 24-4, Oji**
**Ebetsu-shi Hokkaido(JP)**
Inventor: **Matsumoto, Hisashi**
**2-6-3, Namiki-cho**
**Okayama-shi Okayama-ken(JP)**

(74) Representative: **Patentanwälte Wenzel & Kal-**
**koff**
**Flasskuhle 6 Postfach 2448**
**W-5810 Witten(DE)**

## Description

The present invention relates to a process for producing an agricultural paper, said paper being a composite paper composed of a first layer of natural pulp and second layer of synthetic fibre, said first and second layers being joined to each other by a structure which is present at their joining interface.

It has been common practice to raise seedlings in paper pots and transplant the raised seedlings to the field together with the pots. This cultivation method saves labour and increases the yield of crops.

The paper pot to be used as mentioned above should ideally have the following characteristic properties. Air and water permiability necessary for the growth of seedlings. Easy separation of one pot from another so as to prevent the roots of seedlings in adjacent pots from getting entangled one with the other in the period of raising seedlings. Strength and stiffness of the paper to hold seedlings and soil in the pot while transplantation is carried out. Ability to resist rotting by various soils in the period of raising seedlings. Structure that permits the roots of crops to penetrate the pot wall after transplantation. In addition, the paper pots are required to be inexpensive because they cannot be recovered for reuse after transplantation.

To meet the above-mentioned requirements there have been proposed various kinds of agricultural paper. For example, the JP-A 150249/1977 discloses agricultural paper composed of special paper or paper board and non-woven fabric bonded to both sides thereof with a paste or by other means, said paper or paper board rotting or decomposing in soil, and said non-woven fabric being made of synthetic fibre, rotting slowly in soil, and having a highly porous reticulated structure. The JP-A 26118/1981 discloses agricultural paper composed of a first thin film and a second thin film bonded to each other with a water-soluble paste, said second thin film being resistant to rotting and porous enough for radicles to penetrate. The JP-A 109524/1981 discloses agricultural paper composed of paper of natural fibre and synthetic fibres uniformly dispersed thereon and bonded thereto, the amount of said synthetic fibre being 5 to 20 $g/m^2$. The JP-A 60919/1983 discloses agricultural paper composed of paper of natural fibre and a thin film composite synthetic fibres (less than 15 $g/m^2$) bonded to each other, said composite synthetic fibres being composed of the core, made of a synthetic resin having a higher melting point and the sheath made of a synthetic resin having a lower melting point.

In the case of the conventional two- or three-layered agricultural paper as mentioned above the layer of synthetic fibre should be as thin and porous as possible so that it permits a growth of radicles when the paper layer made of natural pulp has rotted after transplantation. However, according to the conventional technology, it is very difficult to produce a uniform, porous, thin film having at least a basis weight lower than 10 $g/m^2$. It is also difficult to uniformly bond such a thin film to the paper layer made of natural pulp. Therefore, the conventional agricultural paper was inevitably expensive.

Another disadvantage of the conventional agricultural paper is that the paper layer made of natural pulp and the layer of artificial or synthetic thin film separate easily from each other on contact with water in the period of raising seedlings, if the two layers are bonded with a paste. With the two layers separated from each other, the pot does not hold the soil and seedlings completely during transplantation by a machine. This causes troubles in the transplantation work.

It is the object of the present invention to improve the method of producing an agricultural paper so that the method is inexpensive and yet superior in performance.

To meet this object the invention proposes the steps of
forming a first wet layer from a paper stock composed chiefly of natural pulp,
forming a second wet layer from an aqueous dispersion composed of synthetic fibre having a basis weight of 3 to 15 $g/m^2$ and joining at the joining interface the first wet layer with the second wet layer by a wet paper making process, whereby the first and second layers are intertwined at said joining interface.

A modified process according to the invention for producing an agricultural paper is characterized by the steps of
forming the second wet layer from an aqueous dispersion composed of composite synthetic fibre made of polymers having different plasticizing temperatures, with the polymer having the lower plasticizing temperature of said polymers covering at least a part of the surface of synthetic fibre having a higher plasticizing temperature, the basis weight of the synthetic fibre being 3 to 10 $g/m^2$,
joining said first layer with said second layer so that the total basis weight becomes 40 to 100 $g/m^2$,
drying the joined layers and
heating said two layers to an intermediate temperature between the higher melting point and the lower melting point of the polymer components of the synthetic fibre whereby the polymer having the lowest plasticizing temperature bonds and fixes the thermoplastic fibres and also bonds and fixes the natural pulp which is intertwined with said thermoplastic fibres at said joining interface.

3

A paper making machine of any type can be used as long as it is capable of joining two or more sheets together, and paper making may be accomplished by the usual combination process. The first layer may be produced from natural pulp, size, reinforcing agent and a small amount of other paper making fibres. The synthetic fibres are made into the second layer after complete dispersion. The first layer and the second layer are placed one over the other while they are still wet, so that the fibres of natural pulp and the synthetic fibres are intertwined with one another at the interface of the two layers. This structure is one of the most important features of the present invention.

The thus formed two layers do not separate from each other after the raising of seedlings. In the case of the modified process the two layers placed one over the other are dried and then heated. The heating temperature is important for the composite fibres constituting the second layer to form the reticulated structure of desired performance. In other words, the heating temperature should be intermediate between the higher melting point and the lower melting point of the two or more polymer components constituting the composite fibre. Upon heating at such a temperature, one of the polymer components which has a low melting point and constitutes at least a part of the surface of the composite synthetic fibre melts, firmly bonding the contact points, without damaging the fibrous structure of the other polymer component having a higher melting point. In this way, the second layer of reticulated structure which provides high paper strength is formed.

If the heating temperature is lower than the above mentioned low melting point, the bonding at the contact points does not take place. On the other hand, if the heating temperature is higher than the higher melting point, all the fibre structure of the polymer constituant is destroyed, with the result that sufficient paper strength is not obtained.

Joining wet sheets is a well known paper making process. Conventionally it is used to produce decorative paper or to improve the uniformity or the processability of composite paper, and it has never been used for the production of composite paper as in the present invention. Here it is used to produce agricultural paper of high performance. In other words, it is used to join a layer of synthetic fibres to a layer of natural pulp, the former having high paper strength with an extremely low basis weight and the latter being expected to rot in soil.

The natural pulp constituting the first layer is not specifically limited. It may be any natural pulp for paper making, which includes wood pulp, such as hardwood pulp and softwood pulp, rag pulp, waste paper pulp and bagasse pulp.

The natural pulp is not specifically limited in beating degree either. However, the preferred beating degree is such that the radicals do not intertwine the paper while seedlings are being raised and yet the paper retains a certain amount of stiffness at the same time of transplantation. The preferred beating degree may be expressed in terms of Canadian standard freeness (referred to as C.S.F.) in the range of 500 to 700 cc. The basis weight of the first layer is higher than 40 $g/m^2$ and usually 50 to 60 $g/m^2$.

The synthetic fibres constituting the second layer are not specifically limited as long as they have corrosion resistance. Examples of the synthetic fibres that can be used include polyvinyl alcohol, polypropylene fibre, polyethylene fibre, polyolefin fibre, polyester fibre, polyamide fibre, polyacrylonitril fibre and polyvinyl chloride fibre. Additionally to these materials the second layer may be composed also of polyvinyl alcohol-based fibrous binders capable of bonding upon exposure to wet heat.

The synthetic fibres may be treated with a surface active agent to improve dispersion in water and hydrophilic nature. In addition, the synthetic fibres may be used in combination with a dispersing agent such as a polyethylene oxide, sodium polyacrylate, sodium tripolyphosphate, polyacrylamide and polyethyleneimine. The bonding of the synthetic fibres may also be accomplished by applying the above mentioned binder in power form or a water resistant binder of PVA, acrylic resin or vinyl acetate in liquid (latex) form. The application of the binder may be accomplished by spraying, dipping or coating during or after the wet paper making process.

In the modified process according to the invention the second layer is made of so-called composite fibres which are made of two kinds of thermoplastic resins which differ in melting point. (The composite fibres include blended fibres.) The form of the composite fibres is not specifically limited. It may be of the side-by-side type, sheath-core type or matrix-fibril type, e.g numerous island in a sea type. The composite fibre should be constructed such that the polymer having the lowest melting point constitutes at least a part of the surface of the composite fibre. This is necessary for the fibres to form the reticulated structure through fusion bonding at their contact points and to provide sufficient paper strength. For example, in the case of a composite fibre of the sheath-cored type or numerous island in the sea type, the sheath or sea component should be made of a polymer having the lower melting point, respectively. Examples of the composite fibres that can be used in the present invention include polyolefin composite fibre of the side-by-side type and sheath-core type and polyester composite fibre of the sheath-core type which are commer-

4

cially available. Another example is one which is disclosed in JP-A 39 412/1985. The composite fibres used in the present invention is cut to a proper length in the range of 100 to 1500 in terms of aspect ratio (defined as a ratio of the length of the fibre to the diameter of a circle having an area corresponding to the sectional area of the fibre).

The agriculture paper gained by the process according to the invention is suitable for pots used for raising seedlings for tap root crops (examplified by sugar beet) and lateral root crops (examplified by vegetable crops and pulse crops). For the latter application, the corrosion resistant fibre constituting the second layer should have a fineness of 3 denier or more and the basis weight of the fibre should be lower than 10 g/m$^2$ so that the second layer forms a coarse reticulated structure that permits the free growth of lateral roots. However, it is not specifically limited in fineness as long as it can be handled by the wet paper making process where the agricultural paper is made into pots for tap root crops. A good average value is 3 denier.

The present inventors carried out extensive studies on the paper strength and the paper making performance of the second layer used in the method of the present invention. It was found as expected, that the paper strength is poor when the synthetic fibre is thin, but it was unexpectedly found that the paper strength does not decrease even when a synthetic fibre is mixed with up to 300 weight per cent of natural pulp, if the synthetic fibre is thicker than 3 denier and the basis weight of the second layer is 3 to 15 g/m$^2$ or, in case of the modified process, 3 to 10 g/m$^2$. It was also found that the paper strength reaches a maximum when the amount of natural pulp mixed is about 100 weight per cent. This suggests that there exists a certain region in which the increase of paper strength of the 2nd layer which is achieved by the addition of natural pulp exceeds the decrease of paper strength caused by the hindrance by natural pulp to joining of synthetic fibres. The reason why the paper strength reaches a maximum when natural pulp is added in an amount more than expected can be this: The thick synthetic fibres at an extremely low basis weight form a coarse reticulation, and the fine natural pulp fills the voids in the reticulation during the paper making process. Thus the synthetic fibres are well-dispersed and yet the amount of natural pulp existing among synthetic fibres is not so great as expected.

Preferred aspects of the invention which are reproduced in the accompanying drawings are now described in greater detail. In the drawings:

Figure 1     is a schematic representation showing one example of the process for producing the agricultural paper according to the invention.

Figure 2     is a perspective view showing one example of pots for raising seedlings.

Figure 3     is a perspective view showing one example of an aggregate of the pots as shown in Figure 2.

Figure 4     is a graph showing the relationship between the basis weight of the synthetic fibre layer and the wet strength of the agricultural papers produced according to the present invention and the comparative example.

Figure 5     is a graph showing the relationship between the basis weight of the synthetic fibre layer and the rooting index and the comparative example.

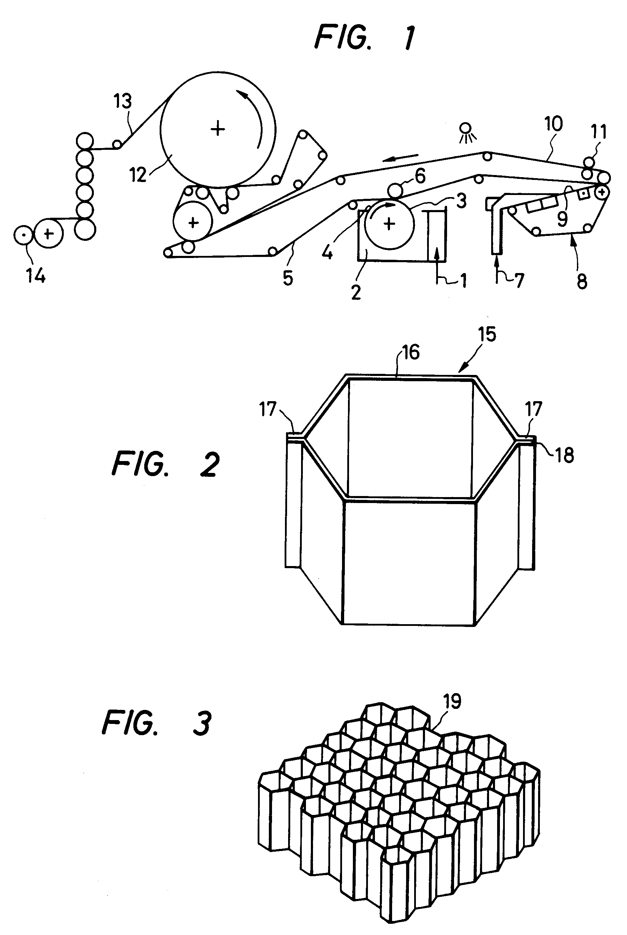

An agricultural paper is produced according to the present invention by using a combination machine as schematically shown in Figure 1. The combination machine joins wet sheets by using a cylinder mould and an inclined wire cloth.

The paper stock is introduced into the vat 2 through the inlet 1. The natural fibres dispersed in water in the vat 2 collect on the cylinder mould 3, forming the wet paper layer 4. The wet paper layer 4 is picked up by the felt 5 and squeezed by the press roll 6. On the other hand, the synthetic fibres are fed through the inlet 7, and they are formed into the synthetic fibre layer 9 on the inclined wire cloth 8. The synthetic fibre layer 9 is picked up on the wet paper layer of natural fibre 4 being carried by the felt. Upon compression by the press roll 11 they form a joined layer 10. The joined layer 10 is dried by the drier 12. The resulting product is the lined paper 13, which is subsequently wound up onto the pope reel. Thus there is obtained the roll paper 14.

Example 1

The agricultural paper was produced in accordance with the present invention using the paper making machine as shown in Figure 1. A pulp layer having a dry basis weight of 60 g/m$^2$ was produced from wood pulp (NUKP) having a C.S.F. of 570 cc. This pulp layer was joined with a synthetic fibre layer of if varied basis weight (2, 3, 5, 10, 15, 20, 25 and 30 g/m$^2$). The synthetic fibre layer was produced, using an inclined wire cloth, from 3-denier polyethylene fibre, 30 mm long, dispersed into water at a concentration of 0,02 weight per cent with the aid of polyethylene oxide (dispersing agent). After dehydration by pressing,the lined paper was dried by a drier at 120˚ C and wound up. The paper making speed was 500 m/min.

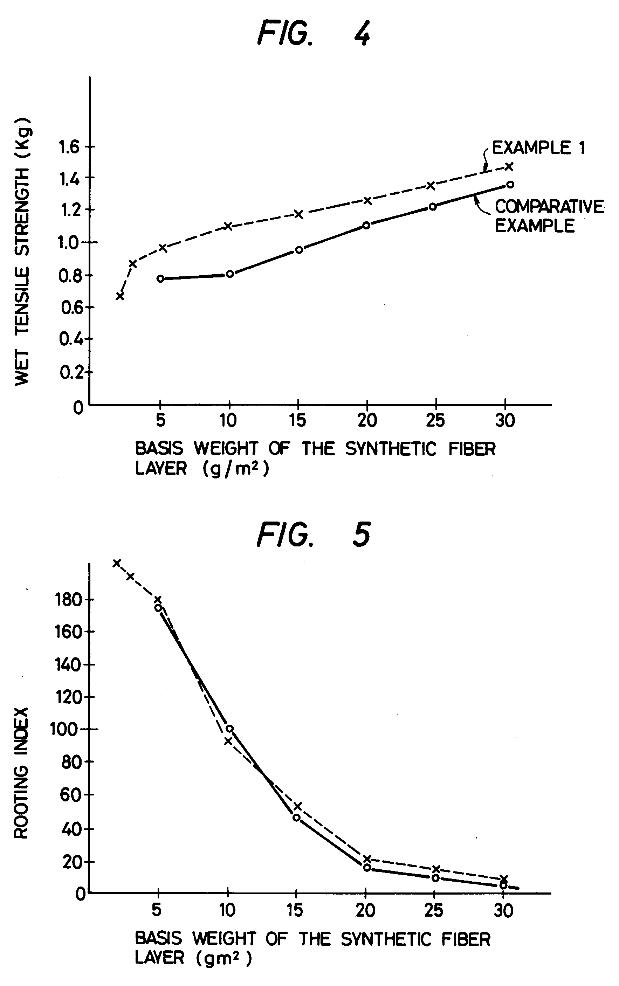

The thus produced eight kinds of paper (with varied basis weight of synthetic fibre layer) were made into bottomless pots 15, with the synthetic fibre layer 16 inside, as shown in Figure 2. Each pot has a hexagonal, pillar-like shape and is 5 cm in diameter and 5 cm high. The edges 17 were bonded together with a water-resistant adhesive or by fusion bonding. Thus the water-resistant bonded part 18 was formed. A large number of pots 15 were bonded together with a water soluable adhesive to form the aggregate pots 19 as shown in Figure 3. Cabbage seeds were sown in the usual way. Seedlings were raised with proper care such as watering for 28 days. The pots of seedlings were separated one from another and transplanted to the field. Each pot retained its shape until transplantation without delamination took place between the pulp layer and the synthetic fibre layer. On the 30th day after transplantation, the state of rooting was examined. The state of the paper strength after raising of the seedlings and the state of rooting at the 30th day after transplantation is shown in Figure 4 and 5 respectively (the wet tensile strength (kg/60 mm) was measured according to the method used for measuring the strength after burying.)

In a Comparative Example 1, the same experiment as mentioned above was carried out using the pots produced in the following manner. The wet paper 4 formed by the cylinder mould 3 was dehydrated by the press roll 11 and then dried by the drier 12 to give paper of natural pulp having a basis weight of 60 g/m$^2$. On this paper were uniformly scattered polyethylene short fibres (having the same fineness and length as mentioned above) so that a basis weight of 5, 10, 15, 20, 25 and 30 g/m$^2$ was achieved. (A basis weight of 2 and 3 g/m$^2$ was technically impossible to achieve.) The scattered polyethylene short fibres were fusion bonded to the paper. The thus produced agricultural paper was made into pots as mentioned above and the pots were used for raising cabbage seedlings. The paper strength and the state of rooting examined in the same manner as in Example 1 are shown in Figures 4 and 5 respectively.

As Figures 4 and 5 show there is no difference in the rooting index between Example 1 and comparative Example 1. However, regarding the paper strength after the raising of the seedlings , the agricultural paper in Example 1 is superior to that in comparative Example 1. This result indicates the uniform dispersion of both natural pulp and synthetic fibres in the agricultural paper produced by the method of the present invention. Incidentally, the rooting index is designated as 100 for the number of roots which penetrated the pot made of the agricultural paper lined with a synthetic fibre layer having a basis weight of 10 g/m$^2$.

Example 2

The synthetic fibre layer having a dry basis weight of 6 g/m$^2$ was produced in the same manner as in Example 1 from a mixture composed of polyvinyl alcohol fibres (1 denier x 15 mm long) and polyethylene fibres (3 denier x 7 mm long). The wet sheet of synthetic fibre was joined with a wet sheet of kraft pulp of Example 1, followed by drying and winding in the same manner as in Example 1. The dried paper was passed through heated calander rolls and then cooled and wound at a rate of 300 m/min. Thus there was obtained the agricultural paper by the method of the invention. This paper was made into pots in the same manner as in Example 1 and the pots were used for raising cabbage seedlings. The pots had a high wet strength after the raising of the seedlings. They had also good handling properties and permitted smooth rooting of lateral roots after transplantation.

Example 3

Agricultural paper was produced according to the invention in the same manner as in Example 1 except that the dry basis weight of kraft pulp paper was 50 g/m$^2$ and the synthetic fibre layer having a dry basis weight of 8 g/m$^2$ was made from a 50 : 50 (by weight) mixture of polyvinyl alcohol fibres (2 denier x 15 mm long) and polyvinyl alcohol-based fibrous binder (1 denier x 7 mm long).

The agricultural paper was made into pots of a hexagonal, pillar-like shape. The pots were used for raising and transplanting cabbage seedlings. In the Comparative Example 2, the wet paper layer of kraft pulp 4 formed by the cylinder mould 3 was dehydrated by the press roll 11 and then dried by the drier 12 to give a paper having a basis weight of 50 g/m$^2$. On the paper were uniformly scattered polyvinyl alcohol fibres (2 denier x 15 mm long) so that a basis weight of 8 g/m$^2$ was achieved. The scattered polyvinyl alcohol fibres were fusion bonded to the paper.

In the Comparative Example 3, agricultural paper was produced in the same manner as mentioned above except that the kraft pulp was replaced by a paper stock composed of kraft pulp and 18 weight per cent of polyvinyl alcohol fibre (2 denier x 7 mm long).

The thus produced agricultural paper was made into pots as mentioned above and the pots were used for raising and transplanting cabbage seedlings.

On the 3rd, 5th and 7th day after transplantation, in each case the number of roots which had penetrated the pot was counted. The results are shown in Table 1. (Incidentally, the pots in comparative examples were poor in strength with delamination after transplantation, and they were also poor in handling properties).

Table 1

| After Transplantation | 3rd day | 5th day | 7th day |
|---|---|---|---|
| Example 3 | 17 | 35 | 65 |
| Comparative Example 2 | 15 | 32 | 68 |
| Comparative Example 3 | 0 | 3 | 12 |

Example 4

Agricultural paper of was produced according to the invention using a combination machine having two cylinder moulds and a Yankee drier. The wet paper layer having a dry basis weight of 50 g/m$^2$ was formed using the first cylinder mould from softwood kraft pulp having a C.S.F. of 530 cc. The wet synthetic fibre layer having a basis weight of 5 g/m$^2$ was formed using the second cylinder mould from a mixture (paper stock) composed of 75 weight per cent of polyvinyl alcohol fibres (1 denier x 7 mm long) and 25 weight per cent of polyvinyl alcohol-based fibrous binder (1 denier x 3 mm long). The two layers were joined together, followed by dehydration by a pressing roll and dried by a Yankee roll at a surface temperature of 110° C.

The wet strength (strength after burying) of the thus produced agricultural paper was measured. The results are shown in Table 3. The strength after burying was measured in the following manner. The sample is buried in the soil containing 23 weight per cent of water in an environment at 30° C and 95 per cent RH for 14 days. After removal from soil a test specimen 60 mm wide is cut out of the sample. The test specimen is folded in quarter along the lengthwise direction. The strength of the test specimen, with a sample length being 5 cm is measured according JIS P-8113

Example 5

Agricultural paper was produced according to the invention in the same manner as in Example 4 except that the synthetic fibre layer having a dry basis weight of 6 g/m$^2$ was formed from a mixture (paper stock) composed of 40 weight per cent of polyester synthetic fibre (1,5 denier x 5 mm long), 20 weight per cent of polyvinyl alcohol fibre (0,5 denier x 3 mm long), and 40 weight per cent of polyvinyl alcohol-based fibrous binder (0,5 denier x 3 mm long) and the pulp layer having a dry basis weight of 55 g/m$^2$ was formed from kraft pulp having a C.S.F. of 570 cc. The agricultural paper was examined for strength after burying in the same manner as in Example 4. The results are shown in Table 3.

Comparative Examples 4 to 6

Paper having a dry basis weight of 60 g/m$^2$ was made using the same first cylinder mould as used in example 4 from the same kraft pulp, polyvinyl alcohol fibres and polyvinyl alcohol-based fibrous binder as used in example 4. The formulation of these components is shown in Table 2. The paper samples were examined for strength after burying in the same manner as in example 4. The results are shown in Table 3.

Table 2

| Comparative Example | Kraft pulp | Polyvinyl alcohol synthetic fibre | Polyvinyl alcohol-based fibrous binder |
|---|---|---|---|
| Comparative Example 4 | 90,0 | 7,5 | 2,5 |
| Comparative Example 5 | 80,0 | 15,0 | 5,0 |
| Comparative Example 6 | 70,0 | 22,5 | 7,5 |

7

Table 3

| Example No. | Strength after burying (kg/60 mm) | Content of synthetic fibre and fibrous binder (wt%) |
|---|---|---|
| Example 4 | 0,72 | 9,1 |
| Example 5 | 0,68 | 9,8 |
| Comparative Example 4 | 0,27 | 10,0 |
| Comparative Example 5 | 0,54 | 20,0 |
| Comparative Example 6 | 0,75 | 30,0 |

It is noted from Table 3 that the agricultural paper in Example 4 and 5 meets the requirement for strength after burying (0,5 kg/60 mm) although the content of synthetic fibres is much less than that in the conventional kraft paper incorporated with synthetic fibres.

Example 6

Agricultural paper was produced according to the present invention in the same manner as in Example 3 except that the kraft pulp was incorporated with 1 to 5 weight per cent of antiseptic agent (copper complex). This agricultural paper was made into pots as in Example 1 and the pots were used for raising and transplanting cabbage seedlings. The disintegration of the natural pulp layer was slower than the paper in Example 3.Consequently, the pots retained sufficient strength and provided good handling properties at the time of transplantation. No adverse effect on rooting was observed.

Example 7

The procedures in Examples 2 and 3 were repeated except that the kraft pulp layer was incorporated with 2,0 weight per cent of urea or ammonium sulfate. The agricultural paper thus obtained by the method of the present invention was made into pots in the same manner as in Example 1 and the pots were used for raising and transplanting cabbage seedlings. With these pots the number of days until transplantation was reduced by about 10% and the growth after transplantation was better than in Examples 2 and 3.

Example 8

Agricultural paper was produced according to the present invention using a combination machine provided with two cylinder moulds. The first layer was made from NUKP having a C.S.F. of 550 cc. The second layer was made from sheath-core type composite synthetic fibre incorporated with the same natural pulp as used for the first layer. The composite fibre is 4 denier in fineness and 10 mm long, with the aspect ratio being 500. The sheath is made of polyethylene terephtalate copolymer having a melting point of 110° C and the core is made of polyethylene terephtalate having a melting point higher than 200° C. After joining the first and second layers, the paper was dried by a Yankee drier at a surface temperature of 110° C and then heated by multi-roll heat rolls at a surface temperature of 140° C. The basis weight of the synthetic fibre in the second layer was 5 g/m$^2$, and the amount of natural pulp added in the second layer was varied in the range of 0 to 400 weight per cent. The basis weight of the first layer was changed according to the mixing ratio of natural pulp in the second layer, so that the total basis weight was 60 g/m$^2$. To see the paper strength after raising the seedlings, the agricultural paper was examined for strength after having been buried in the same manner as in Example 4. The results are shown in Table 4.

Table 4

| Mixing ratio of natural pulp in the second layer (wt% based on composite synthetic fibre) | 0 | 5 | 10 | 20 | 50 | 100 | 200 | 300 | 400 |
|---|---|---|---|---|---|---|---|---|---|
| Strength after burying ( kg/60 mm) | 1,30 | 1,33 | 1,35 | 1,41 | 1,50 | 1,62 | 1,49 | 1,34 | 0,83 |

Example 9

Agricultural paper was produced according to the present invention in the same manner as in Example 8 except that the first layer was made from NUKP having a C.S.F. of 550 cc, and the second layer was made from numerous island-in a sea type composite synthetic fibre as disclosed in JP-A 39412/1985. The composite fibre is 5 denier in fineness and 12 mm long, with the aspect ratio being 550. The sea component is made of polyethylene having a melting point of 105° C and the island component is made of polyethylene terephtalate having a melting point of 245° C. The basis weight of the first layer (of natural pulp) was 54 g/m$^2$ and the basis weight of the composite synthetic fibres alone in the second layer was 6 g/m$^2$.

Example 10

Agricultural paper, was produced according to the present invention in the same manner as in Example 9 except that the second layer was made from sheath-core type composite synthetic fibres incorporated with 50 weight per cent of said NUKP. The composite fibre is 3 denier in fineness and 5 mm long, with the aspect ratio being 300. The sheath is made of polyethylene having a melting point of 100 to 110° C and the core is made of polypropylene having a melting point of 165 to 170° C. The basis weight of the first layer was 50 g/m$^2$, and the basis weight of the composite synthetic fibres alone in the second layer was 6 g/m$^2$.

Comparative Example 7

Single-layer agricultural paper having a basis weight of 60 g/m$^2$ was produced using the same wet paper making machine as used in Example 8 from a paper stock composed of 82 weight per cent of natural pulp as shown in Example 9 and 18 weight per cent of polyolefin type composite synthetic fibres as shown in example 10. Drying and heating were carried out under the same conditions as in Example 8.

Table 5

| Performance | Example 9 | Example 10 | Comparative Example 7 |
|---|---|---|---|
| Strength after burying (kg/60 mm) | 1,41 | 1,38 | 0,38 |

It is noted from Table 5 that the agricultural paper produced by the method of the invention is superior in paper strength to a conventional one made of a mixture of natural pulp and synthetic fibre as shown in Comparative Example 7. The present invention yields a paper strength after burying of more than 0,5 kg/60 mm which is required under ordinary conditions.

**Claims**

1. A process for producing an agricultural paper, said paper being a composite paper composed of a first layer of natural pulp and a second layer of synthetic fibre, said first and second layers being joined to each other by a structure present at their joining interface, said process comprising the steps of
   forming a first wet layer from a paper stock composed chiefly of natural pulp,
   forming a second wet layer from an aqueous dispersion, composed of synthetic fibre having a basis weight of 3 to 15 g/m$^2$ and
   joining at the joining interface the first wet layer with the second wet layer by a wet paper making process, whereby the first and second layers are intertwined at said joining interface.

2. A process as claimed in claim 1, characterized by the steps of
   forming the second wet layer from an aqueous dispersion composed of composite synthetic fibre made of polymers having different plasticizing temperatures, with the polymer having the lower plasticizing temperature of said polymers covering at least a part of the surface of said composite synthetic fibre, the basis weight of the synthetic fibre being 3 to 10 g/m$^2$,
   joining said first layer with said second layer so that the total basis weight becomes 40 to 100 g/m$^2$,

10

drying the joined layers and

heating said two layers to an intermediate temperature between the higher melting point and the lower melting point of the polymer components of the synthetic fibre whereby the polymer having the lower plasticizing temperature bonds and fixes the thermoplastic fibres and also bonds and fixes the natural pulp which is intertwined with said thermoplastic fibres at said joining interface.

3. A process as claimed in claim 1, wherein the natural pulp is one which has a beating degree (C.S.F.) of 500 to 700 cc.

4. A process as claimed in claim 1, wherein the synthetic fibre used for forming the second layer is one or more than one kind selected from the group consisting of polyvinyl alcohol fibre, polypropylene fibre, polyethylene fibre, polyolefin fibre, polyester fibre, polyamide fibre, polyacrylonitrile fibre and polyvinyl chloride fibre.

5. A process as claimed in claim 4, wherein additionally the second layer is composed of polyvinyl alcohol-based fibrous binder capable of bonding upon exposure to wet heat.

6. A process as claimed in claim 2, wherein the thermoplastic synthetic resin fibres in the second layer are those which measure 3 denier in fineness.

7. A process as claimed in claim 2, wherein the second layer is incorporated with natural pulp of up to 300 weight per cent or more based on the amount of the thermoplastic composite synthetic fibres.

**Revendications**

1. Procédé de fabrication d'un papier pour l'agriculture, ledit papier étant un papier composite composé d'une première couche de pulpe naturelle et d'une seconde couche de fibre synthétique. les première et seconde couches mentionnées étant assemblées l'une à l'autre par une structure présente à leur interface de jonction, ledit procédé comprenant les étapes suivantes :

la formation d'une première couche humide d'un raffiné composé principalement de pulpe naturelle,

la formation d'une seconde couche humide à partir d'une dispersion aqueuse composée de fibres synthétiques ayant un grammage de 3 à 15 g/m$^2$ et

l'assemblage à l'interface de jonction de la première couche humide à la seconde couche humide par un procédé de fabrication de papier humide, les première et secondes couches étant entrelacées à l'interface de jonction mentionnée.

2. Procédé selon la revendication 1, caractérisé par les étapes suivantes :

la formation de la seconde couche humide à partir d'une dispersion aqueuse composée de fibres synthétiques composites composées de polymères ayant différentes températures de plastification, avec le polymère ayant la température de plastification la plus basse parmi les polymères metnionnés couvrant au moins une partie de la surface des fibres synthétiques composites mentionnées, le grammage des fibres synthétiques étant de 3 à 10 g/m$^2$,

l'assemblage de ladite première couche à ladite seconde couche si bien que le grammage total devient 40 à 100 g/m$^2$,

le séchage des couches assemblées et

le chauffage des deux couches mentionnées à un température intermédiaire entre le point de fusion le plus haut et le point de fusion le plus bas des composants polymères des fibres synthétiques, le polymère ayant la température de plastification la plus basse liant et fixant les fibres thermoplastiques et liant et fixant également la pulpe naturelle qui est entrelacée avec les fibres thermoplastiques mentionnées à l'interface de jonction mentionnée.

3. Procédé selon la revendication 1 dans lequel la pulpe naturelle est une pulpe qui a un degré de raffinage (norme canadienne C.S.F.) de 500 à 700 cc.

4. Procédé selon la revendication 1 dans lequel les fibres synthétiques utilisées pour former la seconde couche est un ou plusieurs types sélectionné parmi le groupe constitué par les fibres à l'alcool polyvinylique, les fibres de polypropylène, les fibres de polyéthylène, les fibres polyoléfiniques, les fibres de polyester, les fibres de polyamide, les fibres de polyacrylonitrile et les fibres de chlorure de polyvinyle.

5. Procédé selon la revendication 4 dans lequel en plus la seconde couche est composée par un liant fibreux à base d'alcool polyvinylique capable de lier après exposition à de la chaleur humide.

6. Procédé selon la revendication 2 dans lequel les fibres de résine synthétique thermoplastiques de la seconde couche sont celles qui mesurent 3 deniers de finesse.

7. Procédé selon la revendication 2 dans lequel de la pulpe naturelle est incorporée à la seconde couche jusqu'à un poids de 300 pour cent ou plus sur la base de la quantité des fibres synthétiques composites thermoplastiques.

**Patentansprüche**

1. Ein Verfahren zur Herstellung eines Landwirtschaftspapieres, wobei das Papier ein Verbundpapier ist, das aus einer ersten Schicht aus natürlicher Pulpe und einer zweiten Schicht aus synthetischer Faser besteht, bei dem die erste und die zweite Schicht mit Hilfe einer Struktur aneinander befestigt werden, die an ihrer Verbindungsfläche vorhanden ist, wobei das Verfahren die folgenden Schritte umfaßt:
Bildung einer ersten nassen Schicht aus einem Papiermaterial, das hauptsächlich aus natürlicher Pulpe besteht,
Bildung einer zweiten nassen Schicht aus einer wässrigen Dispersion, die aus synthetischer Faser besteht mit einem Basisgewicht von 3 bis 15 g/m$^2$, und
Verbinden der ersten nassen Schicht mit der zweiten nassen Schicht an der Verbindungsfläche mit Hilfe eines Verfahrens zur Herstellung eines nassen Papieres, wobei die erste und die zweite Schicht an der Verbindungsfläche miteinander verschlungen werden.

2. Ein Verfahren nach Anspruch 1, **gekennzeichnet** durch die Schritte:
Bildung der zweiten nassen Schicht aus einer wässrigen Dispersion, die aus einer synthetischen Verbundfaser besteht, hergestellt aus Polymeren, die unterschiedliche Plastiziertemperaturen aufweisen, wobei das Polymer, das die niedrigere Plastiziertemperatur der Polymere aufweist, mindestens einen Teil der Oberfläche der synthetischen Verbundfaser bedeckt und das Basisgewicht der synthetischen Faser 3 bis 10 g/m$^2$ beträgt,
Verbinden der ersten Schicht mit der zweiten Schicht, so daß das gesamte Basisgewicht 40 bis 100 g/m$^2$ wird,
Trocknen der miteinander verbundenen Schichten und Erwärmen der beiden schichten auf eine Zwischentemperatur zwischen dem höheren Schmelzpunkt und dem niedrigeren Schmelzpunkt der Polymerkomponenten der synthetischen Faser, wodurch das Polymer, das die niedrigere Plastiziertemperatur aufweist, die thermoplastischen Fasern verklebt und festigt und ebenso die natürliche Pulpe verklebt und festigt, die mit den thermoplastischen Fasern an der Verbindungsfläche verschlungen ist.

3. Ein Verfahren nach Anspruch 1, bei dem die natürliche Pulpe einen Mahlgrad (C.S.F.) von 500 bis 700 cc hat.

4. Ein Verfahren nach Anspruch 1, bei dem die synthetische Faser, die zur Bildung der zweiten Schicht benutzt wird, einer Sorte oder mehr als einer Sorte angehört, die aus der Gruppe ausgesucht wird, die aus Polyvinylalkoholfaser, Polypropylenfaser, Polyäthylenfaser, Polyolefinfaser, Polyesterfaser, Polyamidfaser, Polyacrylonitrilfaser und Polyvinylchloridfaser besteht.

5. Ein Verfahren nach Anspruch 4, bei dem zusätzlich die zweite Schicht aus einem fasrigen Binder eines Polyvinyls auf Alkoholbasis zusammengesetzt ist, der in der Lage ist, bei nasser Wärme zu verkleben.

6. Ein Verfahren nach Anspruch 2, bei dem die thermoplastischen synthetischen Harzfasern in der zweiten Schicht solche sind, die 3 Denier Feinheit aufweisen.

7. Ein Verfahren nach Anspruch 2, bei dem die zweite Schicht mit natürlicher Pulpe mit bis zu 300 Gewichtsprozent oder mehr durchsetzt ist in Abhängigkeit der Menge der thermoplastischen synthetischen Verbundfasern.

## FIG. 1

## FIG. 2

## FIG. 3

# FIG. 4

# FIG. 5